# EUROPÄISCHE PATENTANMELDUNG

(11) **EP 1 374 678 A1**
(43) Veröffentlichungstag der Anmeldung: **02.01.2004**
(21) Anmeldenummer: 03013912.5
(22) Anmeldetag: 20.06.2003
(51) Int. Cl.: A01N 37/02

(54) **Mikrokapsel zur Bekämpfung von Milben**

(30) Priorität: 28.06.2002 AT 9712002
(71) Anmelder: Schuhleitner, Hubert, 4040 Puchenau (AT); Schuhleitner, Frank, 4040 Puchenau (AT)
(72) Erfinder: Schuhleitner, Hubert, 4040 Puchenau (AT)

(57) **Zusammenfassung**

Vorrichtung zur Vertilgung des Varroaschädlings und anderen im Bienenstöcken auftretenden Schädlingen.

Durch das neue Applikationssystem unter Verwendung mikroverkapselter Ameisensäure und Zusatzstoffen laut Anspruch 1-7 entsteht durch die Zubereitung als lebensmittelechtes Gel ein außerordentlich wirksames Behandlungsmittel gegen die Varroamilbe mit universeller Einsatzmöglichkeit und Vergrößerung der bisher erreichten Bandbreite.

Verschiedene Einsatzvarianten und Verpackungsvarianten, wie in den Figuren 1 - 3, Anspruch 10 - 12 gezeigt, ermöglichen dem Imker eine einfache und sichere Handhabung.

## Beschreibung

Die vorliegende Erfindung betrifft Wirkstoffe zur Bekämpfung von Milben, insbesondere die Varroa- und Tracheenmilbe in Bienenvölkern.

Das Ziel der Erfindung besteht darin, lebensmittelgerechte Wirkstoffe einzusetzen, um jede Kontaminierung und Beeinflussung auf den Honig auszuschließen, größtmöglichste Sicherheit des Anwenders zu garantieren, und die epidemisch auftretenden Schädlinge zu vernichten.
Diese Aufgabe wird erfindungsgemäß durch eine Vielzahl von Mikrokapseln gebildet, die jeweils mit einer Dosis Ameisensäure gefüllt sind.
Mit dieser Erfindung kann, im Vergleich zu den bisher im Umlauf befindlichen Insektiziden chemisch- synthetischen Ursprungs, Rückstände dieser in Wachs und Honig vermieden werden. In die Gruppe bedenklicher Behandlungsstoffe fallen z.B.folgende zur Zeit vielfach in Anwendung befindlichen Kontaktmittel.
Pyrethroide wie etwa Fluvalinat (Apistan®), Coumphos( Perizin®), Amitraz, Cymiazol hydrochlorid, Flumethrin, Bayvarol® Permethrin, Deltramethrin.

Weitere vorteilhafte Eigenschaften der Erfindung sind durch die Unteransprüche und den Zeichnungen, so wie in den Patentansprüchen angegeben, gekennzeichnet.

Eine erfindungsgemäß bevorzugte Formulierung enthält:
Ameisensäure
Äthanol
äther.Öle
Verkapselungsmatrix aus polymerisierter Stärke
Matrixbildner
Disperiermittel
Emulgator
Gelbildner, sowie Verdicker

Jahrelange Feldversuche mit Ameisensäure haben ergeben, dass diese eine bis zu 100%ige akarizide Tiefenwirkung in den verdeckelten Brutzellen aufweist. Da das Gros der Varroamilben sich die meiste Zeit ihres Lebens zur Vermehrung in diesen Zellen aufhält, liegt der Vorteil auf der Hand. Zudem sind alle synthetisch hergestellten Insektizide, wie Pyrethroide, als Kontaktmittel zu bezeichnen, womit man nur gelegentlich ausserhalb der verdeckelten Brutzellen und während der brutlosen Zeit, ca. 2 Monate im Winter, alle Milben erreichen kann. Resistenzbildung und Behandlungsrückstände in Wachs und Honig sind ein zusätzlicher Nachteil bei Verwendung von derartigen Wirkstoffen.

Der Anteil an Äthanol als Zusatzstoff kann erfindergemäß variabel gestaltet werden und dient als Transportmittel für die Ameisensäure während der kälteren Jahreszeit.

Ätherische Öle wie z.B. Thymol, Thymianöl, Majoranöl, Teebaumöl, Nelkenöl usw. tragen zur Desorientierung der Jungmilben bei, wenn diese dem Pheromon ihrer Mutter zum Futterplatz folgen. Auch dafür ist ein variabler Gehalt vorgesehen, da es etwa 7 verschiedene zur Zeit erforschte Varroastämme gibt. Klimatische Bedingungen wie sie in Europa, Afrika, Neuguinea, Süd-und Nordamerika und Asien vorkommen sind zu berücksichtigen.
Bei hohen Temperaturen wird z.B. der Anteil von Alkohol verringert und die Menge ätherischer Öle erhöht.

Durch das hier angewandte Mikroverkapselungsverfahren werden die Wirkstoffe konzentriert im Inneren von, aus Polymeren, geformten Kapseln gespeichert. Bei Freisetzung kommt es in Abhängigkeit der Feuchtigkeit der Stockluft zur Verdampfung der Wirkstoffe. Die Wirkstoffe diffundieren durch die Polymere gemeinsam nach außen, während Wasser aus der Stockluft in das Zentrum der Kapseln eintritt. Die Porengröße der Polymere und die Größe der der Umgebungsluft exponierten Abdampfflächen sowie die durch die Stockluft zugeführte Feuchtigkeit bewirken eine sehr gleichmäßige Wirkstoffabgabe, wobei es bei hohen Temperaturen zu einem langsameren Verdunstungsanstieg kommt als bei kühler, feuchter Witterung.
Aufgrund des Ethanolgehaltes ist es nun möglich, die erfindungsgemäße Formel in einem weiteren Temperaturbereich einzusetzen. Temperaturen, die 10°C über bzw. unter der Stocktemperatur liegen, stellen somit kein Hindernis mehr für die Anwendung einer unbedenklichen wirkenden Gelformulierung dar.
- FIGUR 1: 1) Kassette
2) Abreißdeckel
3) Filterpapier
- FIGUR 2: 4 ) Gelplatte in Filterpapier verpackt
- FIGUR 3: 5) Auflagegestell für Gelplatte

Verschiedene Einsatz-und Verpackungsvarianten für das mikroverkapselte Ameisensäurehältige Gel.

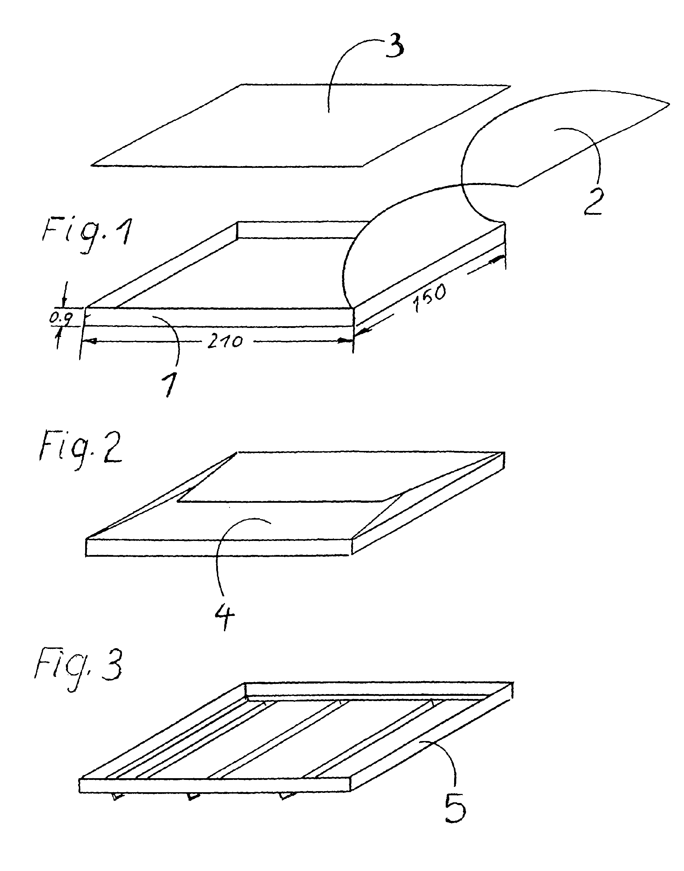

Die in Figur 1 gezeigte Verpackungskassette(1) mit verschweißbarem Abrissdeckel (2) dient zur Aufnahme der in Gel verkneteten, mikroverkapselten Inhaltsstoffe. Um einem Verkleben mit dem Abrissdeckel (2) vorzubeugen wird eine Lage Filterpapier(3) über das in Plattenform gepresste Gel gelegt. Nach der Entfernung des Deckels kann die derart gefüllte Kassette je nach Erfordernis unterhalb der Waben in den Bienenstock eingeschoben oder oberhalb der Waben auf die Rähmchenoberträger stehend oder gestürzt platziert werden.

Fig.2 zeigt die in rechteckiger Form gepresste Gelplatte (4) mit Filterpapier komplett umwickelt, womit beim Übereinanderliegen mehrerer Platten bei Versand und Lagerung in einer eigens dazu gefertigten Schachtel das Verkleben verhindert wird.

Fig.3 zeigt ein Auflagegestell (5) mit Stützleisten, das einen Boden mit Verdunstungsschlitzen aufweist, das als Auflage für die Gelplatte(4) dient. Damit wird die Möglichkeit geschaffen, dass die Behandlung quer sowie längs der Waben durchgeführt werden kann, ohne die Verdunstung zu behindern, wenn die Abdampffläche nach unten zeigt. Grund für die gestürzte Lage ist der Vorteil, dass eine Isoliermatte direkt auf den Verdunster gelegt werden kann und somit eine weitere Behandlungsmöglichkeit darstellt.

Diesem erfindergemäßen Gegenstand entsprechend kann ohne viel Fingerspitzengefühl und Arbeitsaufwand durch den Imker den bisher etwas problematischen Einwirkungen durch Temperatur- und Feuchtigkeitsschwankungen entgegengewirkt werden. Die erforderlichen Wirkstoffmengen werden automatisch abgegeben, wobei die Abgabequote abhängig ist von der Porosität der Mikrokapseln.

## Patentansprüche

1. Mikrokapsel enthaltend Ameisensäure zur Bekämpfung von Milben, insbesondere der Varroa- und Tracheenmilbe **dadurch gekennzeichnet, dass** die Ameisensäure in Form einer ethanolischen Lösung vorliegt.

2. Mikrokapsel nach Anspruch 1 **dadurch gekennzeichnet, dass** die Mikrokapsel zwischen 0.1% - 75 %, bevorzugterweise zwischen 30% - 50 %, Ameisensäure enthält.

3. Mikrokapsel nach den Ansprüchen 1 und 2 **dadurch gekennzeichnet, dass** die Mikrokapsel weiters ätherische Öle enthält.

4. Mikrokapsel nach Anspruch 3 **dadurch gekennzeichnet, dass** das ätherische Öl Thymol oder Majoran ist.

5. Mikrokapsel nach den Ansprüche 1-4 **dadurch gekennzeichnet, dass** die Mikrokapsel aus einem Polymer gebildet wird.

6. Mikrokapsel nach Anspruch 5 **dadurch gekennzeichnet, dass** das Polymer als Freisetzungsregulator ausgebildet ist.

7. Hochviskose Gelformulierung in Form einer Gelplatte (4) enthaltend Mikrokapsel nach den Ansprüchen 1-6.

8. Gelformulierung nach Anspruch 7 **dadurch gekennzeichnet, dass** sie, der Größe der zu behandelnden Bienenstöcke und der Stärke der Bienenvölker in großer Bandbreite entspricht.

9. Verwendung von Mikrokapseln nach den Ansprüchen 1-8 zur Bekämpfung von Milben.

10. Applikationssystem für Ameisensäure-hältige Mikrokapeln nach den Ansprüchen 1-8 **dadurch gekennzeichnet, dass** es aus einer Kasette (1), einem Abreißdeckel (2), einer in Filterpapier (3) verpackten Gelplatte (4) sowie einem Auflagegestell für die Gelplatte (5) besteht.

11. Applikationssystem gemäß Anspruch 10 **dadurch gekennzeichnet, dass** das Auflagegestell für die Gelplatte nach unten offen ist.

12. Applikationssystem **dadurch gekennzeichnet, dass** die Abdampffläche der Kassette(1) sowie die Stärke der Gelplatte auf die Maße 150mmx 210mmx7 bis 10mm plus- minus 20% festgelegt ist.
